(19) Europäisches Patentamt / European Patent Office / Office européen des brevets

(11) **EP 3 950 979 A1**

(12) **EUROPEAN PATENT APPLICATION**
published in accordance with Art. 153(4) EPC

(43) Date of publication:
**09.02.2022 Bulletin 2022/06**

(21) Application number: **20777402.7**

(22) Date of filing: **06.02.2020**

(51) International Patent Classification (IPC):
**C22C 9/00** (2006.01)     **C22F 1/00** (2006.01)
**C22F 1/08** (2006.01)     **H01B 1/02** (2006.01)
**H01B 5/02** (2006.01)

(52) Cooperative Patent Classification (CPC):
**C22C 9/00; H01B 1/02; H01B 5/02;** C22F 1/00;
C22F 1/08

(86) International application number:
**PCT/JP2020/004662**

(87) International publication number:
**WO 2020/195218 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.03.2019 JP 2019057465**

(71) Applicant: **JX Nippon Mining & Metals Corporation Tokyo 105-8417 (JP)**

(72) Inventor: **MUTO, Yuki**
**Hitachi-shi, Ibaraki 317-0056 (JP)**

(74) Representative: **Mewburn Ellis LLP**
**Aurora Building**
**Counterslip**
**Bristol BS1 6BX (GB)**

(54) **COPPER ALLOY PLATE, ELECTRONIC COMPONENT FOR PASSAGE OF ELECTRICITY, AND ELECTRONIC COMPONENT FOR HEAT DISSIPATION**

(57)     Provided is a copper alloy plate consisting of 0.1 to 0.6% by mass of Cr, and from 0.01 to 0.30% by mass in total of one or more of Zr and Ti, the balance being copper and unavoidable impurities. In the copper alloy plate, a difference between a Schmidt factor when tensile stress is applied in a direction parallel to a rolling parallel direction (RD) with respect to a peak orientation of integrated intensity in an inverse pole figure in the RD, as obtained from XRD measurement, and a Schmidt factor when tensile stress is applied in a direction parallel to a rolling perpendicular direction (TD) with respect to a peak orientation of integrated intensity in an inverse pole figure in the TD, as obtained from XRD measurement, is 0.05 or less.

EP 3 950 979 A1

**Description**

FIELD OF THE INVENTION

The present disclosure relates to a copper alloy plate, an electronic component for passage of electricity, and an electronic component for heat dissipation. More particularly, the present disclosure relates to a copper alloy plate used as a material for electronic components such as terminals, connectors, relays, switches, sockets, bus bars, lead frames, and heat sinks in electrical and electronic equipment, automobiles, and the like, as well as an electronic component for passage of electricity and electronic component for heat dissipation using the copper alloy plate.

BACKGROUND OF THE INVENTION

In electronic components such as terminals, connectors, switches, sockets, relays, bus bars, lead frames, and heat sinks installed in electrical and electronic equipment, automobiles, and the like, copper alloy plates having good properties such as strength, electrical conductivity, and thermal conductivity are widely used as materials for transmitting electricity or heat.

In recent years, there has been a trend toward higher currents in electronic components for passage of electricity, for example, connectors for electronic devices, which would require good bending workability, a conductivity of 75% IACS or higher, and a resistance of 550 MPa or higher.

In addition, for example, electronic components for heat dissipation called liquid crystal frames are used in liquid crystal parts of smartphones and tablet PCs. Copper alloy plates used in such heat dissipation applications are also becoming more thermally conductive, which would require good bending workability and high strength. Therefore, the copper alloy plates used in heat dissipation applications would also require an electrical conductivity of 75% IACS or higher and a strength of 550 MPa or higher. Here, since electrical conductivity and thermal conductivity are proportional, an increase of electrical conductivity will also improve thermal conductivity.

However, it is difficult for Corson alloy-based copper alloys to achieve a conductivity of 75% IACS or higher. Therefore, Cu-Cr and Cu-Zr-based copper alloys have been developed.

For example, Patent Literature 1 proposes a copper alloy material consisting of 0.1 to 0.8% by mass of Cr, from 0.005 to 0.5% by mass in total of one or more of Mg, Ti, Zr, Zn, Fe, Sn, Ag, and Si, the balance being copper and unavoidable impurities, wherein the copper alloy material has an average crystal grain size of from 15 to 80 $\mu$m and a variation coefficient of the crystal grain size (standard deviation of the crystal grain size / average crystal grain size) of 0.40 or less. It mentions that the copper alloy material has an electrical conductivity of 75% IACS or higher, and good strength and bending workability.

Further, Patent Literature 2 proposes a copper alloy plate consisting of 0.1 to 0.6% by mass of Cr, from 0.01 to 0.30% by mass of one or more in total of Zr and Ti, the balance being copper and unavoidable impurities, wherein the copper alloy plate satisfies $3 \leq I(220)/I_0(220) \leq 13\%$ for $I(220)/I_0(220)$ determined by X-ray diffraction of a surface of the material, and $0.2 \leq I(200)/I_0(200) \leq 2\%$ for $I(200)/I_0(200)$. It mentions that the copper alloy sheet has an electrical conductivity of 80% IACS or higher, as well as good strength and bend workability.

CITATION LIST

Patent Literatures

[Patent Literature 1] Japanese Patent Application Publication No. 2013-129889 A
[Patent Literature 2] Japanese Patent Application Publication No. 2017-179503 A

SUMMARY OF THE INVENTION

Problem to be Solved by the Invention

The copper alloy plates used in the electronic components may be subjected to bending stress in various directions when processed into electronic components, so that they require good bending workability in various directions (hereinafter referred to as "bending anisotropy"). However, Patent Literatures 1 and 2 do not sufficiently consider the bending anisotropy.

The bending process of the copper alloy plate also requires good bent surface of the bent portion. This is because a poor bent surface of the bent portion leads to a decreased contact area of the bent portion in a connector or the like, causing decreased electrical conductivity. However, the patent Literatures 1 and 2 only determine the bending workability by the presence or absence of cracks, and even if there are no cracks, the bent surface of the bent portion may be defective. Therefore, the techniques disclosed in Patent Literatures 1 and 2 do not always provide good bent surface.

Embodiments of the present invention have been made in order to solve the above problems. An object of an embodiment of the present invention is to provide a copper alloy plate having high electrical conductivity and high strength, and good bending anisotropy.

Also, an object of an embodiment of the present invention is to provide an electronic component for passage of electricity and an electronic component for heat dissipation, which have high electrical conductivity and high strength and can be produced by bending without degrading the bent surface of the bent portion.

Means for Solving the Problem

As a result of intensive studies to solve the above problems, the present inventors have focused on the fact that a Schmidt factor of a copper alloy plate having a specific composition is closely related to the bent surface of the bent portion, and found that the bending anisotropy of the copper alloy plate is improved by controlling a difference between the Schmidt factor when tensile stress is applied in a direction parallel to a rolling parallel direction (RD) and the Schmidt factor when tensile stress is applied in a direction parallel to a rolling perpendicular direction (TD) to a specific range, and have completed the present invention.

Thus, an embodiment of the present invention relates to a copper alloy plate consisting of 0.1 to 0.6% by mass of Cr, and from 0.01 to 0.30% by mass in total of one or more of Zr and Ti, the balance being copper and unavoidable impurities, wherein a difference between a Schmidt factor when tensile stress is applied in a direction parallel to a rolling parallel direction (RD) with respect to a peak orientation of integrated intensity in an inverse pole figure in the RD, as obtained from XRD measurement, and a Schmidt factor when tensile stress is applied in a direction parallel to a rolling perpendicular direction (TD) with respect to a peak orientation of integrated intensity in an inverse pole figure in the TD, as obtained from XRD measurement, is 0.05 or less.

An embodiment according to the present invention relates to an electronic component for passage of electricity or an electronic component for heat dissipation using the copper alloy plate as described above.

Effects of Invention

According to an embodiment of the present invention, it is possible to provide a copper alloy plate having high electrical conductivity and high strength, and good bending anisotropy.

Also, according to an embodiment of the present invention, it is possible to provide an electronic component for passage of electricity and an electronic component for heat dissipation, which have high electrical conductivity and high strength and can be produced by bending without degrading the bent surface of the bent portion.

BRIEF DESCRIPTION OF THE DRAWINGS

FIG. 1 is a view illustrating a measurement principle of stress relaxation percentage
FIG. 2 is a view illustrating a measurement principle of stress relaxation percentage
FIG. 3 is a view illustrating a Schmidt factor.

DETAILED DESCRIPTION OF THE INVENTION

Hereinafter, embodiments according to the present invention will be specifically described. It is to understand that the present invention is not limited to the following embodiments, and various modifications and improvements, which will be within the scope of the present invention, may be made based on ordinary knowledge of a person skilled in the art, without departing from the spirit of the present invention. For example, some components may be deleted from all components disclosed in the embodiment, or components of different embodiments may be optionally combined.

(Composition)

A copper alloy plate according to an embodiment of the present invention consists of 0.1 to 0.6% of Cr, and from 0.01 to 0.30% by mass in total of one or more of Zr and Ti, the balance being copper and unavoidable impurities. In an embodiment, it is preferable to contain from 0.15 to 0.3% by mass of Cr and from 0.05 to 0.20% by mass in total of one or more of Zr and Ti. If the content of Cr is more than 0.6% by mass, bending workability will decrease, and if the content of Cr is less than 0.1% by mass, it will be difficult to obtain a 0.2% yield strength of 550 MPa or more. If the total content of one or more of Zr and Ti is more than 0.30% by mass, the bending workability will decrease, and if it is less than 0.01% by mass, it will be difficult to obtain 0.2% yield strength of 550 MPa or more.

As used herein, the "unavoidable impurities" refers to components that are unavoidably contaminated at a stage of melting raw materials.

In addition, the copper alloy plate according to an embodiment of the present invention preferably contains one or more elements selected from the group consisting of Ag, Fe, Co, Ni, Mn, Zn, Mg, Si, P, Sn, Al, Ca, Y, Nb, Mo, Hf, W, Pt, Au, and B in a total amount of 1.0% by mass or less. These elements contribute to an increase in strength through solid solution strengthening and precipitation strengthening. If the total amount of these elements is more than 1.0% by mass, electrical conductivity may decrease or cracking may occur during hot rolling.

A person skilled in the art would understand that an amount of each element in the copper alloy plate having high strength and high electrical conductivity may be changed depending on combinations of additive elements to be added. In one typical embodiment, 1.0% by mass or less of Ag, 0.1% by mass or less of Fe, 0.1% by mass or less of Co, 0.2% by mass or less of Ni, 0.1% by mass or less of Mn, 0.5% by mass or less of Zn, 0.1% by mass or less of Mg, 0.1% by mass or less of Si, 0.05% by mass or less of P, 0.1% by mass or less of Sn, 0.1% by mass or less of Al, 0.1% by mass or less of Ca, 0.1% by mass or less of Y, 0.1% by mass or less of Nb, 0.1% by mass or less of Mo, 0.1% by mass or less of Hf, 0.1% by mass or less of W, 0.1% by mass or less of Pt, 0.1% by mass or less of Au, 0.05% by mass or less of B, can be added. However, the copper alloy plate according to the present invention is not necessarily limited to these upper limits, as long as the combination and amount of the additive elements are such that the conductivity is not below 75% IACS.

The copper alloy plate has a thickness of, for example, from 0.03 to 0.6 mm, although not particularly limited thereto.

(Schmidt Factor)

A Schmidt factor of a copper alloy sheet is an indicator of the liability of causing slip deformation, and is closely related to a bent surface of a bend portion formed by bending. For example, if the Schmidt factor is higher when tensile stress is applied in a specific direction, the bent portion formed by bending in the specific direction will have a better bent surface. This would be because as a value of the Schmidt factor is higher, the slip surface is easier to slip (a maximum value of the Schmidt factor is 0.5), so that by increasing the Schmidt factor in a particular direction, the slip deformation is easily generated when a bending load is applied in the particular direction.

In a bending process of a copper alloy plate, bending stress is applied in various directions: parallel to, perpendicular to, or other than a rolling direction of the copper alloy sheet. Therefore, to improve the bending anisotropy, it is necessary to improve the bent surface of the bent portion in various directions.

Therefore, the present inventors have considered that it is important to reduce a difference between a bent surface in B.W.: Bad Way (a direction where a bending axis of the copper alloy plate is the same as the rolling direction), which is often difficult to create a good bent surface, and a bent surface in G.W.: Good Way (a direction where the bending axis of the copper alloy plate is perpendicular to the rolling direction), which is often easy to create a good bent surface. This is because the bent surface of the copper alloy plate in directions other than B.W. and G.W. is assumed to be equivalent to or higher than that in B.W., and to be equivalent to or lower than that in G.W.

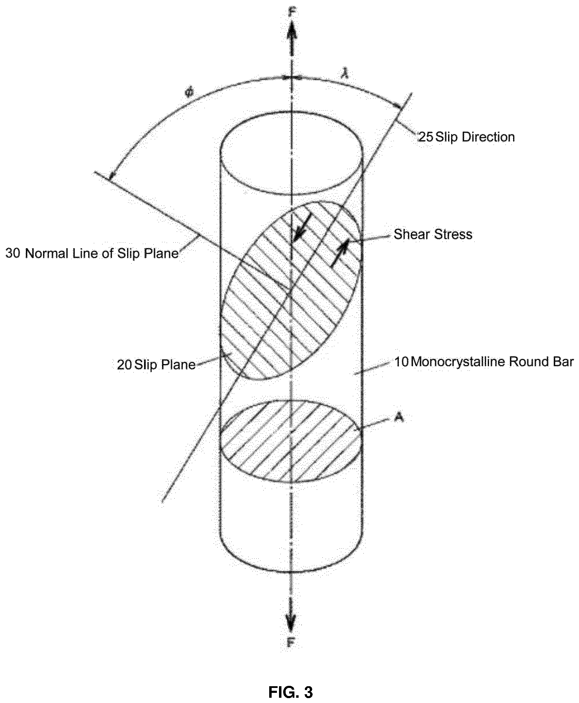

FIG. 3 shows a model for simply explaining tensile resolved shear stress of a monocrystal.

Specifically, FIG. 3 is a model view for simply explaining the Schmid factor, and schematically shows the plastic deformation of the monocrystal. That is, when monocrystalline round bar 10 having a cross-sectional area A is pulled with a uniaxial load F, the tensile resolved shear stress is generated on a slip plane 20 in the crystal grains of the monocrystalline round bar 10 and in a slip direction 25. When the resolved shear stress $\tau$ reaches critical shear stress $\tau_C$ specific for the material, the slip deformation (plastic deformation) will occur. The resolved shear stress $\tau$ is expressed by: $\tau = (F / A) \cdot \cos\lambda \cdot \cos\varphi = \sigma \cdot \cos\lambda \cdot \cos\varphi$, in which $\sigma$ is an axial stress, $\varphi$ is an angle formed by a load axis and a normal line of the slip plane, and $\lambda$ is an angle formed by the load axis and the slip direction. This is Schmidt's law, and the "$\cos\lambda \cdot \cos\varphi$" is the Schmidt factor. The Schmidt factor reaches its maximum value when $\lambda = \varphi = 45°$ (for the Schmidt factor, see Plastic Working Technology Series 2 "Materials", edited by the Japan Society for Plastic Working, Corona Publishing Co., Ltd., p.12).

The above Schmidt factor is calculated as follows: a value when tensile stress is applied in a direction parallel to a rolling parallel direction (RD) with respect to a peak orientation of integrated intensity in an inverse pole figure in the RD and a value when tensile stress is applied in a direction parallel to a rolling perpendicular direction (TD) with respect to a peak orientation of integrated intensity in an inverse pole figure in the TD. The inverse pole figure is obtained by XRD (X-ray diffraction) measurement. When a difference between the Schmidt factor when tensile stress is applied in the direction parallel to RD and the Schmidt factor when tensile stress is applied in the direction parallel to TD, as determined by this method, is less than 0.05, the bent surface of the bent portion in various directions is improved and the bending anisotropy is improved.

Further, both of the Schmidt factor when the tensile stress is applied in the direction parallel to the RD and the Schmidt factor when the tensile stress is applied in the direction parallel to the TD, determined by the above method, are preferably 0.40 or more. Each Schmid factor of 0.40 or more can lead to relatively easy dislocation motion when a bending load is applied to the copper alloy plate, so that the bent surface of the bent portion is improved. This would be because the slip deformation caused by the movement of dislocations enables continuous deformation and makes it difficult for large dents and the like to occur on the surface of the material.

The Schmidt factor was calculated using the following equation:

$$(\text{Schmidt factor}) = \cos\lambda \cdot \cos\varphi$$

$$\cos\lambda = t \cdot n \, / \, |\, t \,||\, n \,|$$

$$\cos\varphi = t \cdot s \, / \, |\, t \,||\, s \,|$$

in which:

$\varphi$     is an angle formed by a load axis and a normal line of a slip plane;
$\lambda$     is an angle formed by a load axis and a slip direction;
t     is a unit vector parallel to a tensile load direction;
n     is a unit vector parallel to a normal vector of the slip plane; and
s     is a unit vector parallel to the slip direction.

(Bent Surface)

A surface roughness Ra of the bent portion is used for the evaluation of the bent surface. A lower Ra value provides decreased irregularities on the surface of the bent portion, and a larger contact area when used in a connector or the like, so that good electrical conductivity is ensured. The Ra of the bent portion is preferably 2.0 μm or less, and more preferably 1.5 μm or less.

(Tensile strength)

In an embodiment of the present invention, the tensile strength (TS) is preferably 550 MPa or more, and more preferably 600 MPa or more. The tensile strength of 550 MPa or more can ensure the strength required for the copper alloy plate.

(0.2% Yield Strength)

In an embodiment of the present invention, the 0.2% yield strength (YS) is 550 MPa or more, and more preferably 580 MPa or more. The 0.2% yield strength of 550 MPa or more can ensure the strength required for the copper alloy plate.

(Conductivity)

In an embodiment of the present invention, the conductivity is preferably 75% IACS or higher, and more preferably 80% IACS or higher. The conductivity of 75% IACS or more can ensure the conductivity (thermal conductivity) required for the copper alloy plate.

(Stress Relaxation Percentage)

In an embodiment of the present invention, the stress relaxation percentage is preferably 15% or less, and more preferably 14% or less. The stress relaxation percentage of 15% or less can ensure the strength required for the copper alloy plate.

(Application)

The copper alloy plate according to the embodiment of the present invention can be suitably used for applications of electronic components such as terminals, connectors, relays, switches, sockets, bus bars, lead frames, and heat dissipation plates, and in particular useful for applications of electronic components for passage of electricity such as connectors and terminals used in electric motor vehicles and hybrid motor vehicle, or applications of electronic components for heat dissipation such as liquid crystal frames used in smartphones and tablet PCs.

(Production Method)

The copper alloy plate according to the embodiment of the present invention can be produced by the following production steps. First, electrolytic copper or the like is melted as a pure copper raw material, and an oxygen concentration is reduced by carbon deoxidization or the like. Subsequently, one or more of Cr, Zr and Ti, and optionally other alloy elements are added, and cast into a copper alloy ingot. The ingot is then subjected to hot rolling, followed by first cold rolling, solutionizing treatment, second cold rolling, and an aging treatment in this order.

The copper alloy ingot preferably has a thickness of from 30 to 300 mm, although not limited thereto.

The hot rolling is preferably carried out at a temperature of from 800 to 1000°C to form a plate having a thickness of from 2 to 30 mm.

After the hot rolling, the first cold rolling is carried out. In the first cold rolling, the thickness is preferably set to 0.15 to 5 mm, and more preferably 0.25 to 1.0 mm.

In the first cold rolling, the total workability is set to 60 to 80%, and a strain rate for each pass is set to (10 / total workability) s$^{-1}$ or more. By carrying out the hot rolling under the above conditions, the crystal grain size after the solutionizing treatment can be decreased and the growth of the grains in the Cube orientation can be suppressed. As a result, the difference between the Schmidt factor when tensile stress is applied in the direction parallel to RD and the Schmidt factor when tensile stress is applied in the direction parallel to TD can be decreased.

The total workability in the first cold rolling is calculated by: (thickness before cold rolling - thickness after cold rolling) / thickness before cold rolling $\times$ 100%.

The strain rate for each pass can be calculated using the following equation:

$$d\varepsilon \ / \ dt = (2\pi n \ / \ 60r^{1/2}) \ \cdot \ (R \ / \ H)^{1/2} \ \cdot \ \ln (1 \ / \ (1\text{-}r))$$

in which:

$d\varepsilon \ / \ dt$      is a strain rate for each pass;
n          is a roll rotation speed (rpm);
r          is workability (%) / 100;
R         is a roll radius (mm); and
H         is a plate thickness (mm) before each pass.

The solutionizing treatment is preferably maintained at 800 to 1000 °C, and then cooled in water.

After the solutionizing treatment, the second cold rolling is carried out. In the second cold rolling, the thickness is preferably set to 0.03 to 0.6 mm, and more preferably 0.04 to 0.5 mm.

The aging treatment is preferably carried out at 300 to 500 °C for 5 to 30 hours.

A method for producing the copper alloy plate according to an embodiment of the present invention includes subjecting a copper alloy ingot consisting of 0.1 to 0.6% by mass of Cr, and from 0.01 to 0.30% by mass in total of one or more of Zr and Ti, the balance being copper and unavoidable impurities, to hot rolling, followed by a first cold rolling step, a solutionizing treatment step, a second cold rolling step, and an aging treatment step, wherein in the first cold rolling step, the total workability is from 60 to 80%, and a strain rate for each pass is (10 / total workability) s$^{-1}$ or more.

The above production method can be used to produce a copper alloy plate having high electrical conductivity, high strength, and good bending anisotropy.

EXAMPLES

Hereinafter, embodiments of the present invention will be described in more detail with reference to Examples, but the present invention is not limited to these Examples.

Alloy elements were added to molten copper in the proportions as shown in Table 1, and then cast into a copper alloy ingot having a thickness of 200 mm. The copper alloy ingot was heated at 950 °C for 3 hours and subjected to hot rolling to have a thickness of 10 mm. Subsequently, oxidized scales on the surface of the hot-rolled plate were removed by grinding with a grinder, and then subjected to the first cold rolling with the total workability as shown in Table 1. The strain rate for each pass in the first cold rolling is shown in Table 1. Subsequently, the solutionizing treatment was carried out at 900 °C, and the second cold rolling was then carried out to have a thickness of 0.2 mm. The aging treatment was then carried out at 500 °C for 10 hours.

<Tensile Strength (TS)>

The tensile strength (TS) in the direction parallel to the rolling direction was measured by a tensile tester according to JIS Z 2241: 2011.

<0.2% Yield Strength (YS)>

The 0.2% yield strength (YS) in the direction parallel to the rolling direction was measured by a tensile tester according to JIS Z 2241: 2011.

<Electrical Conductivity (EC)>

A specimen was collected such that a longitudinal direction of the specimen was parallel to the rolling direction, and the electrical conductivity at 20 °C was measured by the four-terminal method in accordance with JIS H 0505: 1975.

<Stress Relaxation Percentage>

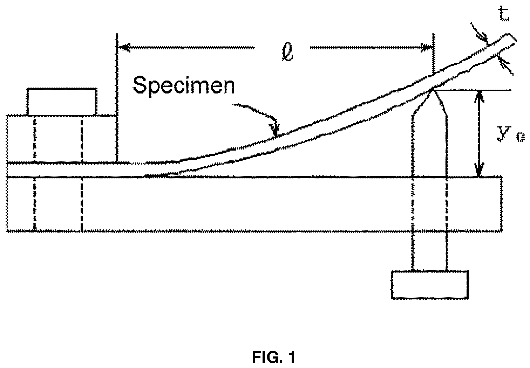

A strip-shaped specimen having a width of 10 mm and a length of 100 mm was collected such that the longitudinal direction of the specimen was parallel to the rolling direction. As shown in FIG. 1, a deflection of $y_0$ was applied to the specimen at a position of I = 50mm as a point of action, and a stress corresponding to 80% of the 0.2% yield strength (measured in accordance with JIS Z 2241:2011) in the rolling direction was applied. The $y_0$ was determined by the following equation:

$$y_0 = (2 / 3) \cdot I^2 \cdot s / (E \cdot t)$$

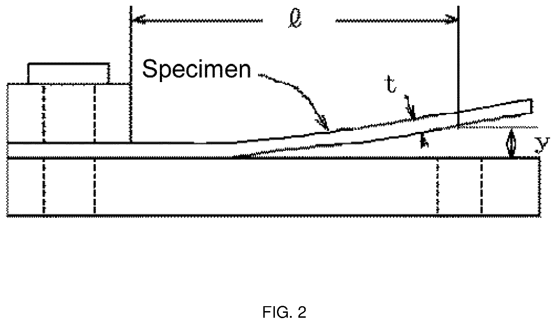

in which E is the Young's modulus in the rolling direction and t is the thickness of the sample. The specimen was unloaded after heating it at 150 °C for 1000 hours, and a permanent deformation amount (height) y was measured as shown in FIG. 2, and the stress relaxation percentage was calculated by: {[y (mm) / $y_0$ (mm)] $\times$ 100 (%)}.

<Bending Anisotropy>

For bending anisotropy, a sample cut out to have a width of 1 mm and a length of 20 mm was used as a bending specimen, and the bent surface was evaluated. W bending tests of B.W. (a direction where the bending axis is in the same direction as the rolling direction) and G.W. (a direction where the bending axis is perpendicular to the rolling direction) were conducted according to JIS H 3130:2012, and the surface of the bent portion was analyzed using a confocal laser microscope, and the Ra ($\mu$m) defined in JIS B 0601: 2013 was calculated. The bent surface was marked as ◎ if Ra was 1.5 $\mu$m or less; ○ if Ra was greater than 1.5 $\mu$m and 2.0 $\mu$m or less; △ if Ra was greater than 2.0 $\mu$m and 3.0 $\mu$m or less, and $\times$ if Ra was greater than 3.0 $\mu$m, for both B.W. and G.W.

<Inverse Pole Figure>

The inverse pole figure was obtained by XRD measurement. The XRD measurement used Rigaku RINT-TTR to measure the X-ray diffraction in the thickness direction of the surface of the copper alloy plate. Further, X-ray diffraction of fine copper powder was measured. Here, the X-ray was Ka radiation, a tube voltage was 30KV, and a tube current was 100mA. By dividing integrated intensity of the copper alloy plate in each orientation by integrated intensity of the powdered copper, normalized inverse pole figures in the rolling parallel direction (RD) and the rolling perpendicular direction (TD) were prepared. From the inverse pole figures, an orientation with a peak integrated intensity was determined.

<Schmidt Factor>

The copper alloy of the component has a face-centered cubic structure (FCC), so that its main slip system is {111}<110>. The Schmidt factors were calculated as a value in the main slip system when the tensile load was applied parallel to the TD direction with respect to the orientation where the integrated intensity peaked when viewed from the rolling perpendicular direction (TD), and as a value in the main slip system when the tensile load was applied parallel to the RD direction with respect to the orientation where the integrated intensity peaked when viewed from the rolling parallel direction (RD). In this case, it should be noted that the orientation where the integrated intensity peaks when viewed from the TD direction is parallel to the TD direction, and the orientation where the integrated intensity peaks when viewed from the RD direction is parallel to the RD direction.

Specifically, as described above, the Schmidt factor can be determined using the following equation:

$$(\text{Schmidt factor}) = \cos\lambda \cdot \cos\varphi$$

$$\cos\lambda = t \cdot n \, / \, | \, t \, | | \, n \, |$$

$$\cos\varphi = t \cdot s \, / \, | \, t \, | | \, s \, |$$

in which:

$\varphi$ is an angle formed by a load axis and a normal line of a slip plane;
$\lambda$ is an angle formed by a load axis and a slip direction;
t: a unit vector parallel to a tensile load direction;
n: a unit vector parallel to a normal vector of the slip plane; and
s: a unit vector parallel to the slip direction.

Since the tensile load is applied in the direction parallel to TD or RD, the "t" is parallel to the direction where the integrated intensity peaks when viewed from TD or RD. Further, since an actual active slip system among the main slip systems takes a maximum value of the Schmitt factor, the "n" and "s" should be selected in such a combination that the Schmitt factor defined in the above equation takes the maximum value.

The composition and production conditions of each specimen and the results obtained for each of Examples and Comparative Examples are shown in Table 1. The Comparative Examples were produced under the same conditions as those of Examples, except for the production conditions shown in Table 1.

Table 1

| | Composition (% by mass) | | | | First Cold Rolling | | TS (MPa) | YS (MPa) | EC (%IACS) | Stress Relaxation Percentage (%) | Bending Anisotropy | Schmidt Factor | | |
|---|---|---|---|---|---|---|---|---|---|---|---|---|---|---|
| | Cr | Zr | Ti | Additive Element | Total Workability (%) | Strain Rate (s$^{-1}$) | | | | | | TD | RD | Difference between RD and TD |
| Example 1 | 0.2 | 0.1 | -- | -- | 70 | 20 | 629 | 603 | 83.5 | 13.0 | ◎ | 0.43 | 0.42 | 0.01 |
| Example 2 | 0.2 | 0.2 | -- | -- | 70 | 20 | 659 | 645 | 81.4 | 6.9 | ◎ | 0.40 | 0.42 | 0.02 |
| Example 3 | 0.3 | 0.1 | -- | -- | 70 | 20 | 654 | 645 | 81.4 | 6.3 | ◎ | 0.40 | 0.44 | 0.04 |
| Example 4 | 0.4 | 0.05 | -- | -- | 70 | 20 | 671 | 640 | 80.2 | 13.4 | ◎ | 0.47 | 0.44 | 0.03 |
| Example 5 | 0.2 | -- | 0.1 | Si:0.03 | 70 | 20 | 621 | 601 | 84.9 | 13.2 | ◎ | 0.45 | 0.42 | 0.03 |
| Example 6 | 0.2 | 0.1 | -- | Si:0.03 | 70 | 20 | 620 | 611 | 84.8 | 12.6 | ◎ | 0.40 | 0.44 | 0.04 |
| Example 7 | 0.2 | 0.1 | -- | Ag:0.01 | 70 | 20 | 625 | 601 | 84.3 | 7.9 | ◎ | 0.45 | 0.42 | 0.03 |
| Example 8 | 0.2 | 0.1 | -- | Ag:1.0 | 70 | 20 | 631 | 619 | 83.1 | 10.5 | ◎ | 0.46 | 0.43 | 0.03 |
| Example 9 | 0.2 | -- | 0.1 | Fe:0.01 Mn:0.01 | 70 | 20 | 649 | 634 | 84.6 | 12.4 | ◎ | 0.48 | 0.47 | 0.01 |
| Example 10 | 0.2 | 0.1 | -- | Co:0.01 Ni:0.01 | 70 | 20 | 642 | 627 | 83.4 | 13.8 | ◎ | 0.44 | 0.42 | 0.02 |
| Example 11 | 0.2 | 0.1 | -- | Zn:0.01 P:0.01 Sn:0.01 | 70 | 20 | 648 | 619 | 83.5 | 10.2 | ◎ | 0.45 | 0.46 | 0.01 |
| Example 12 | 0.2 | 0.1 | -- | Mg:0.01 | 70 | 20 | 647 | 637 | 83.5 | 13.4 | ◎ | 0.47 | 0.48 | 0.01 |
| Example 13 | 0.2 | 0.1 | -- | Al:0.01 Ca:0.01 | 70 | 20 | 622 | 599 | 82.6 | 6.1 | ◎ | 0.48 | 0.47 | 0.01 |

(continued)

| | Composition (% by mass) | | | | First Cold Rolling | | TS (MPa) | YS (MPa) | EC (%IACS) | Stress Relaxation Percentage (%) | Bending Anisotropy | Schmidt Factor | | |
|---|---|---|---|---|---|---|---|---|---|---|---|---|---|---|
| | Cr | Zr | Ti | Additive Element | Total Workability (%) | Strain Rate ($s^{-1}$) | | | | | | TD | RD | Difference between RD and TD |
| Example 14 | 0.2 | 0.1 | -- | Y:0.01 Nb:0.01 Mo:0.01 | 70 | 20 | 628 | 609 | 83.0 | 7.3 | ◎ | 0.45 | 0.47 | 0.02 |
| Example 15 | 0.2 | 0.1 | -- | Hf:0.01 | 70 | 20 | 631 | 610 | 84.1 | 12.2 | ◎ | 0.46 | 0.42 | 0.04 |
| Example 16 | 0.2 | 0.1 | -- | W:0.01 Pt:0.01 Au:001 | 70 | 20 | 637 | 619 | 82.9 | 10.2 | ◎ | 0.47 | 0.46 | 0.01 |
| Example 17 | 0.2 | 0.1 | -- | -- | 80 | 20 | 650 | 646 | 84.3 | 11.9 | ◎ | 0.46 | 0.48 | 0.02 |
| Example 18 | 0.2 | 0.1 | -- | -- | 60 | 20 | 612 | 588 | 83.2 | 7.6 | ◎ | 0.43 | 0.41 | 0.02 |
| Example 19 | 0.2 | 0.1 | -- | -- | 70 | 30 | 650 | 629 | 83.3 | 9.7 | ◎ | 0.40 | 0.43 | 0.03 |
| Example 20 | 0.2 | 0.1 | -- | -- | 70 | 15 | 623 | 601 | 84.9 | 11.2 | ◎ | 0.43 | 0.40 | 0.03 |
| Example 21 | 0.2 | 0.1 | -- | -- | 60 | 15 | 631 | 602 | 84.0 | 12.1 | ○ | 0.38 | 0.41 | 0.03 |
| Comp. 1 | 1.0 | 0.1 | -- | -- | 70 | 10 | 739 | 709 | 74.4 | 6.5 | △ | 0.43 | 0.47 | 0.04 |
| Comp. 2 | 0.2 | 0.5 | -- | -- | 70 | 10 | 674 | 650 | 73.6 | 9.3 | △ | 0.40 | 0.44 | 0.04 |
| Comp. 3 | 0.05 | 0.1 | -- | -- | 70 | 10 | 545 | 523 | 86.3 | 19.6 | ◎ | 0.47 | 0.44 | 0.03 |
| Comp. 4 | 0.20 | 0.005 | -- | -- | 70 | 10 | 543 | 529 | 84.8 | 17.2 | ◎ | 0.43 | 0.47 | 0.04 |
| Comp. 5 | 0.2 | -- | 0.005 | -- | 70 | 10 | 547 | 523 | 86.0 | 19.1 | ◎ | 0.45 | 0.43 | 0.02 |
| Comp. 6 | 0.2 | 0.1 | -- | Sn:10.0 | 70 | 10 | Cracking during Hot Rolling | | | | | | | |
| Comp. 7 | 0.2 | 0.1 | -- | P:10.0 | 70 | 10 | Cracking during Hot Rolling | | | | | | | |
| Comp. 8 | 0.2 | 0.1 | -- | -- | 50 | 10 | 649 | 622 | 83.5 | 7.5 | △ | 0.42 | 0.35 | 0.07 |

(continued)

| | Composition (% by mass) | | | | First Cold Rolling | | TS (MPa) | YS (MPa) | EC (%IACS) | Stress Relaxation Percentage (%) | Bending Anisotropy | Schmidt Factor | | |
|---|---|---|---|---|---|---|---|---|---|---|---|---|---|---|
| | Cr | Zr | Ti | Additive Element | Total Workability (%) | Strain Rate (s$^{-1}$) | | | | | | TD | RD | Difference between RD and TD |
| Comp. 9 | 0.2 | 0.1 | -- | -- | 95 | 10 | 627 | 614 | 84.1 | 8.9 | △ | 0.39 | 0.45 | 0.06 |
| Comp. 10 | 0.2 | 0.1 | -- | -- | 70 | 1 | 622 | 606 | 82.9 | 7.0 | △ | 0.46 | 0.39 | 0.07 |
| Comp. 11 | 0.2 | 0.1 | --- | -- | 50 | 1 | 587 | 531 | 80.7 | 8.2 | × | 0.45 | 0.37 | 0.08 |

As shown in Table 1, it was confirmed that each of the copper alloy plates according to Examples 1 to 21 each having the specific composition and the difference between the Schmid factors in RD and TD of 0.05 or less had a TS of 550 MPa or more, an ERC of 75% IACS or more, a stress relaxation percentage of 15% or less, and a bending anisotropy of ⊚, as well as higher conductivity and higher strength, and improved bending anisotropy.

On the other hand, the copper alloy plate according to each of Comparative Examples 1 and 2 had a lower EC and poor bending anisotropy, because the content of Cr or Zr was too high.

The copper alloy plate according to each of Comparative Examples 3 to 5 had a lower TS and a higher stress relaxation percentage, because the content of Cr, Zr or Ti was too low.

The copper alloy plate according to each of Comparative Examples 6 and 7 was cracked during the hot rolling, because the content of Sn or P was too high.

The copper alloy plate according to Comparative Example 8 had poor bending anisotropy, because the total workability was too low in the first cold rolling, resulting in a larger difference between the Schmidt factors in RD and TD.

The copper alloy plate according to Comparative Example 9 had poor bending anisotropy, because the total workability was too high in the first cold rolling, resulting in a larger difference between the Schmitt factors in RD and TD.

The copper alloy plate according to Comparative Example 10 had poor bending anisotropy, because the strain rate for each pass in the first cold rolling was too slow, resulting in a larger difference between the Schmitt factors in RD and TD.

The copper alloy plate according to Comparative Example 11 had poor bending anisotropy, because the total workability was too low in the first cold rolling and the strain rate for each pass was too slow, resulting in a larger difference between the Schmitt factors in RD and TD.

As can be seen from the above results, according to an embodiment of the present invention, it is possible to provide a copper alloy plate having high electrical conductivity and high strength, and good bending anisotropy. Also, according to an embodiment of the present invention, it is possible to provide an electronic component for passage of electricity and an electronic component for heat dissipation, which have high electrical conductivity and high strength and can be produced by bending without degrading the bent surface of the bent portion.

Description of Reference Numerals

10    monocrystalline round bar
20    slip plane in grain of monocrystalline round bar
25    slip direction of monocrystalline round bar
30    normal line of slip plane

**Claims**

1.  A copper alloy plate, consisting of 0.1 to 0.6% by mass of Cr, and from 0.01 to 0.30% by mass in total of one or more of Zr and Ti, the balance being copper and unavoidable impurities,
    wherein a difference between a Schmidt factor when tensile stress is applied in a direction parallel to a rolling parallel direction (RD) with respect to a peak orientation of integrated intensity in an inverse pole figure in the RD, as obtained from XRD measurement, and a Schmidt factor when tensile stress is applied in a direction parallel to a rolling perpendicular direction (TD) with respect to a peak orientation of integrated intensity in an inverse pole figure in the TD, as obtained from XRD measurement, is 0.05 or less.

2.  The copper alloy plate according to claim 1, wherein the copper alloy plate has a tensile strength of 550 MPa or more, a conductivity of 75% IACS or more, and a stress relaxation percentage of 15% or less.

3.  The copper alloy plate according to claim 1 or 2, comprising one or more selected from the group consisting of Ag, Fe, Co, Ni, Mn, Zn, Mg, Si, P, Sn, Al, Ca, Y, Nb, Mo, Hf, W, Pt, Au and B in a total amount of 1.0% by mass or less.

4.  The copper alloy plate according to any one of claims 1 to 4, wherein the Schmidt factor when the tensile stress is applied in the direction parallel to the RD and the Schmidt factor when the tensile stress is applied in the direction parallel to the TD are 0.40 or more.

5.  An electronic component for passage of electricity comprising the copper alloy plate according to any one of claims 1 to 4.

6. An electronic component for heat dissipation comprising the copper alloy plate according to any one of claims 1 to 4.

FIG. 1

FIG. 2

**FIG. 3**

## INTERNATIONAL SEARCH REPORT

| | International application No. |
|---|---|
| | PCT/JP2020/004662 |

| A. CLASSIFICATION OF SUBJECT MATTER |
|---|
| Int.Cl. C22C9/00(2006.01)i, C22F1/00(2006.01)n, C22F1/08(2006.01)n, H01B1/02(2006.01)i, H01B5/02(2006.01)i <br> FI: C22C9/00, H01B1/02A, H01B5/02Z, C22F1/00602, C22F1/00623, C22F1/00630A, C22F1/00630F, C22F1/00630K, C22F1/00661A, C22F1/00681, C22F1/00682, C22F1/00683, C22F1/00685Z, C22F1/00691B, C22F1/00691C, C22F1/00694A, C22F1/00694B, C22F1/00694Z, C22F1/08B <br> According to International Patent Classification (IPC) or to both national classification and IPC |

| B. FIELDS SEARCHED |
|---|
| Minimum documentation searched (classification system followed by classification symbols) <br> Int.Cl. C22C9/00-9/10, C22F1/00, C22F1/08, H01B1/02, H01B5/02 |
| Documentation searched other than minimum documentation to the extent that such documents are included in the fields searched <br> Published examined utility model applications of Japan 1922-1996 <br> Published unexamined utility model applications of Japan 1971-2020 <br> Registered utility model specifications of Japan 1996-2020 <br> Published registered utility model applications of Japan 1994-2020 |
| Electronic data base consulted during the international search (name of data base and, where practicable, search terms used) <br> CAplus/REGISTRY(STN) |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2018-159104 A (JX NIPPON MINING & METALS CORPORATION) 11.10.2018 (2018-10-11) | 1-6 |
| A | JP 2018-154910 A (JX NIPPON MINING & METALS CORPORATION) 04.10.2018 (2018-10-04) | 1-6 |
| A | WO 2012/026610 A1 (FURUKAWA ELECTRIC CO., LTD.) 01.03.2012 (2012-03-01) | 1-6 |
| A | JP 2005-298948 A (NIKKO METAL MANUFACTURING CO., LTD.) 27.10.2005 (2005-10-27) | 1-6 |
| A | JP 2012-12644 A (HITACHI CABLE LTD.) 19.01.2012 (2012-01-19) | 1-6 |
| A | JP 2010-285664 A (HITACHI CABLE LTD.) 24.12.2010 (2010-12-24) | 1-6 |
| P, A | JP 2019-157258 A (JX NIPPON MINING & METALS CORPORATION) 19.09.2019 (2019-09-19) | 1-6 |

☐ Further documents are listed in the continuation of Box C.    ☒ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br> 13.04.2020 | Date of mailing of the international search report <br> 21.04.2020 |
| Name and mailing address of the ISA/ <br> Japan Patent Office <br> 3-4-3, Kasumigaseki, Chiyoda-ku, Tokyo 100-8915, Japan | Authorized officer <br><br> Telephone No. |

Form PCT/ISA/210 (second sheet) (January 2015)

INTERNATIONAL SEARCH REPORT
Information on patent family members

| | International application No. |
|---|---|
| | PCT/JP2020/004662 |

```
JP 2018-159104 A   11.10.2018   (Family: none)

JP 2018-154910 A   04.10.2018   (Family: none)

WO 2012/026610 A1  01.03.2012   EP 2610358 A1
                                CN 103069025 A
                                KR 10-2013-0143672 A
                                KR 10-2014-0001821 A
                                TW 201211282 A1
                                CN 103468999 A
                                TW 201406971 A

JP 2005-298948 A   27.10.2005   (Family: none)

JP 2012-12644 A    19.01.2012   (Family: none)

JP 2010-285664 A   24.12.2010   (Family: none)

JP 2019-157258 A   19.09.2019   (Family: none)
```

**EP 3 950 979 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013129889 A

- JP 2017179503 A

**Non-patent literature cited in the description**

- Materials. Plastic Working Technology Series. Japan Society for Plastic Working, Corona Publishing Co., Ltd, vol. 2, 12